# EUROPEAN PATENT SPECIFICATION

(11) **EP 4 129 677 B1**
(45) Date of publication and mention of the grant of the patent: **19.11.2025**
(21) Application number: 21774517.3
(22) Date of filing: 15.03.2021
(51) Int. Cl.: B32B 27/40, C08J 7/04, C08G 18/42, C08G 18/62, C08L 75/06, C08G 18/73, C08G 18/08, C08G 18/44, C08G 18/48, C08G 18/75, C09D 175/04, C09J 175/04

(54) **MULTILAYER FILM**
MEHRSCHICHTIGE FOLIE
FILM MULTICOUCHE

(30) Priority: 27.03.2020 JP 2020058909
(43) Date of publication of application: 08.02.2023
(73) Proprietor: Nihon Matai Co., Ltd., Tokyo 111-8522 (JP)
(72) Inventor: ARIMA Tomonori, Moriyama City Shiga 5240044 (JP); KOBAYASHI Yuri, Moriyama City Shiga 5240044 (JP)
(74) Representative: Gulde & Partner
(86) International application number: PCT/JP2021/010325
(87) International publication number: WO 2021/193188

(56) References cited:
- EP-A1- 3 059 290
- EP-A1- 4 071 191
- WO-A1-2018/119056
- WO-A1-2018/221405
- WO-A1-2018/221405
- WO-A2-2006/118883
- JP-A- 2002 293 872
- JP-A- 2010 024 386
- JP-A- 2018 053 194
- JP-A- 2018 141 139
- JP-A- 2020 050 816
- JP-A- H11 225 588
- JP-A- H11 227 124
- JP-A- S60 222 249
- ANONYMOUS: "ArgoGuard 49510-60DV", SWM ENGINEERED FOR TOMORROW, 31 December 2018 (2018-12-31), pages 1 - 1, XP055861314

## Description

### Technical Field

The present invention relates to a multilayer film having a thermoplastic polyurethane layer and a surface coating layer.

### Background Art

Adhesive sheets used as painting protective sheets or surface protective sheets for preventing scratches caused by abrasions and flying stones on the exterior parts of vehicles such as automobiles and for preventing deterioration due to weather are used to protect painted surfaces, headlights, window glass, and other parts of automobiles, and therefore must be pasted even along cumbersome sites of steps or three-dimensional curved surfaces. For this reason, they are required to have followability and stretchability, are often based on thermoplastic polyurethane films, and can be usually defined by the type of polyol, such as polyester-based, polycaprolactone-based, and polycarbonate-based.

These polyurethane films are sticky, and when used in an outdoor environment, if sand, dust, or other dirt attaches to the surface, the dirt will settle and cannot be removed, and therefore, the above-mentioned protective sheets are generally made into multilayer films by providing dirt-preventive coating layers on the surface of the polyurethane films. See, for example, JP 2005-272 558 A, JP 2008-539107 A, JP 2015-98574 A, JP 2015-52100 A, JP 2014-166748 A, JP 2018-53193 A or JP 2019-001015 A. Further examples may be found in EP 4 071 191 A1, WO 201 8/221 405 A1, EP 3 059 290 A1 or WO 2006/118883 A2.

Various studies have also been made on such multilayer films. For example, JP 2019-001015 A proposes use of a thermoplastic polyester-based polyurethane having high hardness in a surface protective layer for the purpose of improving handleability at the time of construction.

### Summary of Invention

### Technical Problem

Chemicals may attach to protective sheets pasted on automobiles. Specifically, they are cleaning agents called engine cleaners or engine conditioners and used to clean various sites such as engine rooms as well as the neighborhood of wheels. Such a chemical, when attaching to a protective sheet, may pass through a coating layer and reach a polyurethane film, so that the film is dissolved in the chemical or is swollen in the chemical and then dried, thereby impairing its appearance.

When dirt-preventive coating layers are provided on polyurethane film surfaces, a coating agent diluted with a solvent is often used in the coating layers. Such a polyurethane film surface is often coated directly, and in this case, the solvent in the coating agent may penetrate the polyurethane film and degrade a polyurethane film surface on the opposite side without the coating layer. This degradation further renders close-adhesion strength insufficient when an adhesive is applied to the surface or the surface is pasted on an adherend by thermal welding.

Hence, there has been a demand for the absence of change in appearance without the swelling of thermoplastic polyurethane films resulting from the permeation of engine cleaners added dropwise to surface coating layers, and the absence of reduction in adhesive strength upon use by the application of adhesives or pasting on other adherends by thermal welding or the like.

In this context, JP 2019-001015 A, which makes mention about thermoplastic polyurethane films having a multilayer configuration, neither mentions nor suggests chemical resistance.

Although JP 2015-98574 A makes mention about chemical resistance, this patent literature targets organic solvents such as gasoline as chemicals that attach to surfaces, and neither envisions chemicals having a high dissolution property such as dichloromethane, a component of engine cleaners, nor mentions change in appearance when chemicals attach.

An object of the present invention is to provide a multilayer film excellent in chemical resistance.

### Solution to Problem

As a result of diligent investigations to solve the above-mentioned problems, the present inventors have come to the findings below.

That is, they have come to a finding that a multilayer film having a thermoplastic polyurethane layer and a surface coating layer can be excellent in chemical resistance by using in the thermoplastic polyurethane layer a thermoplastic polyurethane that is a reaction product obtained by using hexamethylene diisocyanate, and optimizing the content thereof or the thickness of the layer.

The present invention is based on these findings by the present inventors, and the means to solve the above-mentioned problems are as follows.

According to a first aspect of the present disclosure, a multilayer film having a thermoplastic polyurethane layer and a surface coating layer, in which the thermoplastic polyurethane layer comprises a single layer or a plurality of layers, and a layer adjacent to the surface coating layer comprises more than 30% by mass of a thermoplastic polyurethane that is a reaction product obtained by using hexamethylene diisocyanate (hereinafter, referred to as "HDI-TPU"), and wherein among the plurality of layers the layer adjacent to the surface coating layer has a thickness of 5 µm or larger.

Further, when the thermoplastic polyurethane layer comprises a single layer, the single layer further comprises a thermoplastic polyurethane that is a reaction product obtained by using dicyclohexylmethane diisocyanate (hereinafter, referred to as "H₁₂MDI-TPU").

Preferably, when the thermoplastic polyurethane layer may comprise a plurality of layers, a layer other than the layer adjacent to the surface coating layer comprises H₁₂MDI-TPU.

Further preferred which when the thermoplastic polyurethane layer comprises a plurality of layers, the layer adjacent to the surface coating layer may comprise 100% by mass of HDI-TPU.

In a preferred embodiment, the surface coating layer may have a urethane bond.

In another preferred embodiment, a stress at the time of 10% elongation may be 20 N/25 mm or less, and a load (residual stress) 30 seconds after stopping at a state of 40% elongation may be 25 N/25 mm or less.

In another preferred embodiment, a haze value according to JIS K7136 may be 3.0% or less.

Another aspect of the present disclosure relates to the use of the multilayer film to protect an adherend having a curved surface.

### Advantageous Effects of Invention

The multilayer film of the present invention can be excellent in chemical resistance because a layer adjacent to the surface coating layer in the thermoplastic polyurethane layer comprises more than 30% by mass of a thermoplastic polyurethane that is a reaction product obtained by using hexamethylene diisocyanate (hereinafter, referred to as "HDI-TPU"), and has a thickness of 5 µm or larger, and wherein when the thermoplastic polyurethane layer comprises a single layer, the single layer further comprises a thermoplastic polyurethane that is a reaction product obtained by using dicyclohexylmethane diisocyanate (hereinafter, referred to as "H12MDI-TPU").

### Brief Description of Drawings

[Figure 1] Figure 1 is cross section showing an example of one form of the layer configuration of a multilayer film of the present invention.
[Figure 2] Figure 2 shows an example of pasting a multilayer film of Figure 1 on an adherend.
[Figure 3] Figure 3 shows another example of pasting a multilayer film of Figure 1 on an adherend.
[Figure 4] Figure 4 is cross section showing an example of another form of the layer configuration of a multilayer film of the present invention.
[Figure 5] Figure 5 shows an example of pasting a multilayer film of Figure 4 on an adherend.
[Figure 6] Figure 6 shows another example of pasting a multilayer film of Figure 4 on an adherend.
[Figure 7] Figure 7 is a photograph showing the results of engine cleaner resistance in Example 1.
[Figure 8] Figure 8 is a photograph showing the results of engine cleaner resistance in Comparative Example 2.
[Figure 9] Figure 9 is a photograph showing the results of pasting workability on an automobile door mirror in Example 22.
[Figure 10] Figure 10 is a photograph showing the results of pasting workability on an uneven painted steel sheet in Example 24.

### Description of Embodiments

The multilayer film of the present invention has at least a thermoplastic polyurethane layer and a surface coating layer.

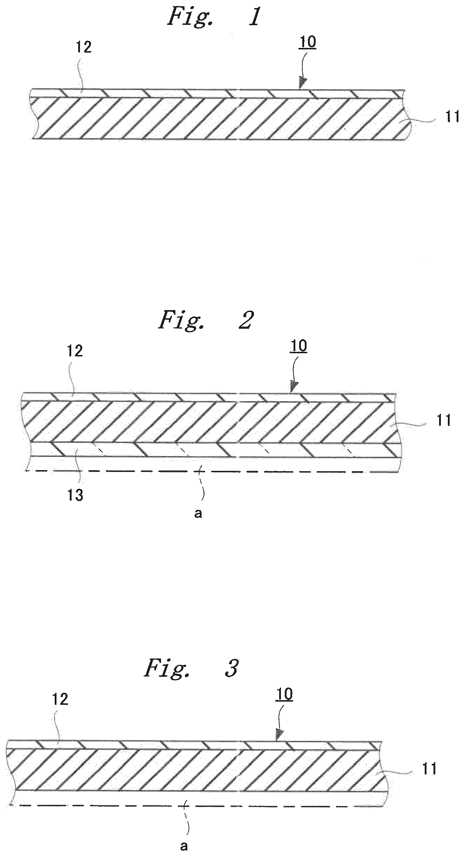

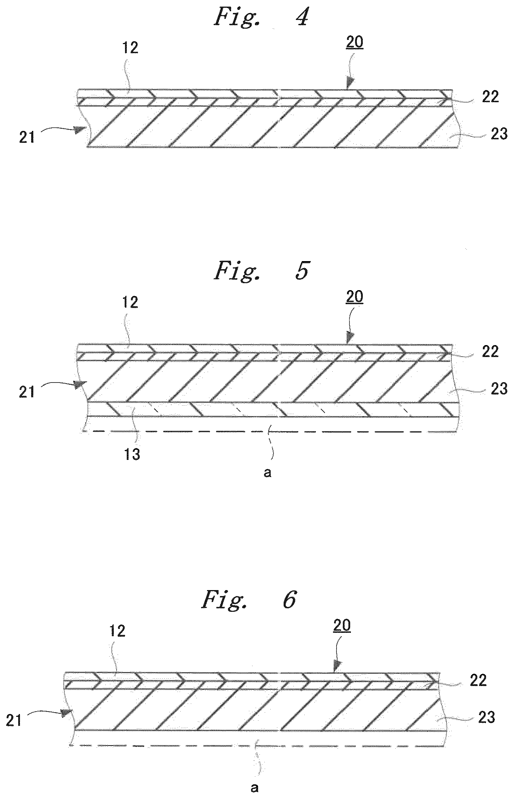

Figure 1 is a diagram showing an example of one form of the layer configuration of the multilayer film of the present invention, Figure 2 is a diagram showing an example of pasting the multilayer film of Figure 1 on an adherend, and Figure 3 is a diagram showing another example of pasting the multilayer film of Figure 1 on an adherend. Figure 4 is a diagram showing an example of another form of the layer configuration of the multilayer film of the present invention, Figure 5 is a diagram showing an example of pasting the multilayer film of Figure 4 on an adherend, and Figure 6 is a diagram showing another example of pasting the multilayer film of Figure 4 on an adherend.

A multilayer film 10 shown in Figure 1 is constituted by a central thermoplastic polyurethane layer 11 and a surface coating layer 12 formed so as to be adjacent to the surface thereof.

When pasting the multilayer film 10 on the object to be protected, the thermoplastic polyurethane layer 11 and the surface coating layer 12 are used as the base material, and as shown in Figure 2, an adhesive layer 13 is provided on the opposite side of the thermoplastic polyurethane surface without the surface coating layer, and pasted on an adherend a. In this way, it is used for preventing scratches and deterioration of objects to be protected including the exterior parts of vehicles, such as painted surfaces, headlights, window glass, and other parts of automobiles, for example.

In addition, since polyurethane is thermoplastic and adhesiveness can also be obtained by thermal melting, the multilayer film 10 can also be pasted on the adherend a for use while directly thermally melting it, without providing an adhesive layer, as shown in Figure 3.

On the other hand, a multilayer film 20 shown in Figure 4 has a two-layer configuration of a first polyurethane layer 22 and a second polyurethane layer 23 in order from the side where a central thermoplastic polyurethane layer 21 is adjacent to a surface coating layer 12.

In the multilayer film 20, which has this two-layer configuration of the thermoplastic polyurethane layer 21, the second polyurethane layer 23 achieves improvement in the pasting workability of the first polyurethane layer 22. A surface coating layer 12 is formed on the surface of the thermoplastic polyurethane layer 21, as in the multilayer film 10 of Figure 1.

The multilayer film 20 is used, as in the multilayer film 10 of Figure 1, in such a way that, as shown in Figure 5, an adhesive layer 13 is provided on the opposite side of the thermoplastic polyurethane surface without the surface coating layer, and pasted on an adherend a. Alternatively, the multilayer film 20 can also be pasted on the adherend a for use while directly thermally melting it, without providing an adhesive layer, as shown in Figure 6.

Subsequently, components of the respective layers constituting the multilayer film of the present invention will be described.

### <Thermoplastic Polyurethane Layer>

In the present invention, the thermoplastic polyurethane means a block copolymer obtained by polymerizing a polyisocyanate, a chain extender, and a polyol, and the thermoplastic polyurethane layer means a single layer comprising the thermoplastic polyurethane or a laminate comprising a plurality of layers.

The present invention can provide a film excellent in chemical resistance by using a thermoplastic polyurethane (hereinafter, referred to as "HDI-TPU") that is a reaction product obtained by using hexamethylene diisocyanate (hereinafter, also referred to as "HDI") as a component constituting the thermoplastic polyurethane layer.

The polyisocyanate component of HDI-TPU, when the thermoplastic polyurethane layer comprises a plurality of layers, is preferably constituted by only HDI, and other polyisocyanates can be contained as polymerizable components, without impairing the effects of the present invention.

The polyisocyanate of the thermoplastic polyurethane is not particularly limited as long as HDI is contained as a main component in the layer adjacent to the surface coating layer. Examples thereof include aliphatic diisocyanates, alicyclic diisocyanates, isocyanate group-terminated compounds resulting from the reaction of polyisocyanates with active hydrogen group-containing compounds, polyisocyanate-modified products resulting from the reaction of polyisocyanates, and polyisocyanates that are partially stabilized with a blocking agent having one active hydrogen in the molecule. Examples of the aliphatic diisocyanates include dodecane diisocyanate and trimethyl-hexamethylene diisocyanate. Examples of the alicyclic diisocyanates include cyclohexane diisocyanate, dicyclohexylmethane diisocyanate, isophorone diisocyanate, hydrogenated xylylene diisocyanate, and norbornane-diisocyanatomethyl. Examples of the reaction of polyisocyanates include a carbodiimidation reaction. Examples of the blocking agent having one active hydrogen in the molecule include methanol, n-butanol, benzyl alcohol, ethyl acetoacetate, ε-caprolactam, methyl ethyl ketone oxime, phenol, and cresol.

Examples of the chain extender of the thermoplastic polyurethane include, but are not particularly limited to, compounds with a molecular weight of 500 or less. Examples of such compounds include ethylene glycol, diethylene glycol, triethylene glycol, propylene glycol, 1,3-propylene glycol, 1,4-butanediol, 1,9-nonanediol, 2-methyl-1,3-propanediol, 3-methyl-1,5-pentanediol, neopentyl glycol, N-phenyldiisopropanolamine, monoethanolamine, dipropylene glycol, 1,4-butylene glycol, 1,5-pentanediol, 1,6-hexanediol, and 1,4-bis(2-hydroxyethoxy)benzene.

There is no particular restriction on the polyol of the thermoplastic polyurethane as long as it is a compound with a molecular weight of about 200 to 10,000 that has two hydroxy groups in one molecule, and examples thereof include polyether diols, polyester diols, and polycarbonate diols.

Specific examples of the polyether diols include polyethylene glycol, polypropylene glycol (PPG), copolymers of ethylene oxide and propylene oxide, and polytetramethylene glycol (PTMG).

Examples of the polyester diols include poly(ethylene adipate) diol, poly(propylene adipate) diol, poly(butylene adipate) diol (PBA), poly(hexamethylene adipate) diol, poly(butylene isophthalate) diol, and poly-ε-caprolactonediol (PCL).

Examples of the polycarbonate diols include polyhexamethylene carbonate diol (PHC), and co-condensates of polyhexamethylene carbonate diol with other polyester diols, polyether diols, and polyetherester diols.

One of these polyisocyanates, chain extenders, or polyols may be used alone, or a combination of two or more types thereof may be used.

The thermoplastic polyurethane is synthesized by known methods such as a one-shot method and a prepolymer method, and can be produced in the form of pellets by known methods such as a batch reaction method and a continuous reaction method.

As commercially available products of HDI-TPU, for example, the trade name "Miractran (R) XN-2000" series of Tosoh Corp., the trade name "Elastollan (R)" series of BASF Japan, and others can be used.

The hardness of the film constituted by the thermoplastic polyurethane layer is not particularly limited, but is usually in the range of Shore A hardness of 70 to Shore D hardness of 65, preferably Shore A hardness of 80 to Shore D hardness of 60, and more preferably Shore A hardness of 85 to 95. When the hardness is larger than Shore D hardness of 65, the load (residual stress) of the film 30 seconds after stopping at a state of 40% elongation and the stress value of the film in a state of 10% elongation are high, and when fabricating a multilayer film and pasting it, the film may be hard and the curved surface followability may not be obtained. When the Shore A hardness is smaller than 70, the firmness is weak and the film may be difficult to be handled during pasting. The Shore A hardness is a standard for measuring the hardness of general rubbers, and the Shore D hardness is a similar standard for a rubber with high hardness exceeding Shore A hardness of 95. Both can be measured using a durometer (spring-type rubber hardness tester) in accordance with JIS K7311.

The thermoplastic polyurethane layer, when comprising only HDI-TPU, i.e., 100% by mass of HDI-TPU except for trace components such as impurities or additives, may have a strong rubber elastic property. For improving pasting workability on adherends having steps or three-dimensional curved surfaces, it is preferable to mix HDI-TPU with a thermoplastic polyurethane excellent in pasting workability, without impairing chemical resistance.

In the case of mixing HDI-TPU with a thermoplastic polyurethane excellent in pasting workability, the compounding mass ratio between the HDI-TPU and the resin excellent in pasting workability is more than 3:7, preferably 4:6 or more, and more preferably 5:5 or more. That is, the thermoplastic polyurethane layer comprises more than 30% by mass, preferably 40% by mass or more, and more preferably 50% by mass or more, of HDI-TPU. When 50% by mass or more of HDI-TPU is contained therein, chemical resistance can be excellent. On the other hand, if the amount of HDI-TPU compounded is 30% by mass or less, its compatibility with the resin is poor and appearance may not be excellent in such a way that the haze value of the thermoplastic polyurethane layer mentioned later is larger than 3.0%.

HDI-TPU and a thermoplastic polyurethane excellent in pasting workability may assume a multilayer configuration, without impairing chemical resistance, in order to improve pasting workability on adherends having steps or three-dimensional curved surfaces. In this case, in the present invention, HDI-TPU is used as a component constituting the layer adjacent to the surface coating layer in order to obtain chemical resistance. The second polyurethane layer 23 shown in Figure 4 corresponds to such a layer comprising the thermoplastic polyurethane excellent in pasting workability.

Suitable examples of the thermoplastic polyurethane excellent in pasting workability include, among the polyisocyanates mentioned above, a thermoplastic polyurethane that is a reaction product obtained by using dicyclohexylmethane diisocyanate (hereinafter, referred to as "H₁₂MDI-TPU").

As commercially available products of H₁₂MDI-TPU, for example, the trade name "ESTANE (R)" series of Lubrizol Corporation, the trade name "Elastollan (R)" series of BASF Japan, the trade name "KRYSTALGRAN" series of Huntsman Corporation, and others can be used.

When the thermoplastic polyurethane layer has a plurality of layers, the HDI-TPU-containing layer adjacent to the surface coating layer is 5 µm or thicker, and preferably 10 µm or thicker. If the thickness is smaller than 5 µm, chemical resistance may not be excellent.

In this context, the thickness of the thermoplastic polyurethane layer can be measured in accordance with JIS K7130 using a commercially available film thickness gauge. Also, the thickness of each layer can be measured, for example, by observing 3 locations (both ends and a central part) on the cross section thereof under a microscope.

In the case of such a plurality of layers, the HDI-TPU-containing layer preferably comprises only HDI-TPU, i.e., 100% by mass of HDI-TPU except for trace components such as impurities or additives. In the absence of other resins compounded therewith, the resulting film tends to have a good haze and can be excellent in chemical resistance.

The thermoplastic polyurethane layer having a single layer or a plurality of layers can be formed by known methods such as a T-die casting method, a T-die nip forming method, an inflation molding method, and a calendering method, for example, and the T-die nip method is particularly preferred.

A plurality of layers with a resin excellent in pasting workability can be constituted by appropriately selecting a direct lamination method such as coextrusion molding, thermal fusion or extrusion lamination, an indirect lamination method using an adhesive such as dry lamination, or the like. Among them, it is preferred to form a film having a plurality of layers by coextruding a plurality of resin layers from a T-die.

When the thermoplastic polyurethane layer is formed by the T-die nip method, it can be produced by passing it through a cooling roll along with a separator in the form of a film (or in the form of a sheet) on one side or both sides of the thermoplastic polyurethane in a molten state that has been extruded from a flat die.

Examples of the material that forms the separator include polyester-based resins such as polyethylene terephthalate (PET), polyolefin-based resins such as polyethylene (PE) and polypropylene (PP), polyimide (PI), polyether ether ketone (PEEK), and paper.

The thermoplastic polyurethane layer is usually obtained by temporarily laminating the thermoplastic polyurethane in a molten state on the separator, cooling and curing the thermoplastic polyurethane, and then peeling off the separator. When the separator cannot be easily released from such a laminated film of the separator and the thermoplastic polyurethane, it is preferable to use a separator whose surface has been further subjected to a release treatment. Examples of the method of release treatment include a method for coating the surface with a silicone-based, fluorine-based, acrylic, melamine-based, alkyd-based, or other release agent, and a method for laminating a polyolefin-based resin such as polyethylene or polypropylene thereon. In particular, a polyethylene terephthalate film surface-treated with a release agent is suitably used as the separator.

In the case of applying a film-forming resin composition for surface coating layer formation, or an adhesive to the thermoplastic polyurethane layer in a subsequent step, silicone-based release agents, if used, may migrate to the thermoplastic polyurethane layer surface and interfere with close adhesion or adhesion between the thermoplastic polyurethane layer and the adherend or other components such as the adhesive, and therefore, non-silicone-based release agents are preferred.

The thickness of the thermoplastic polyurethane layer is not particularly limited, and for both a single layer and a plurality of layers, the total thickness of all layers is usually 50 to 500 µm, preferably 100 to 300 µm, and more preferably 100 to 200 µm. When it is thinner than 50 µm, the film may be difficult to be handled during pasting and may be easily scratched by flying stones. When it is thicker than 500 µm, the film may be difficult to be pasted and may not have followability to steps or three-dimensional curved surfaces.

As for the optical characteristics of the thermoplastic polyurethane layer, in order for the resulting multilayer film not to affect the visibility of the object to be protected, the total light transmittance is preferably 90% or more, preferably 92% or more, and the haze value is preferably 3.0% or less, preferably 2.0% or less. When the total light transmittance is smaller than 90% and the haze value is larger than 3.0%, the film may appear whitish when pasted on glossy painted surfaces such as automobiles. Measurements of total light transmittance and haze value can be performed using a haze meter, and total light transmittance and haze value can be measured in accordance with JIS K7361-1 and JIS K7136, respectively.

In the thermoplastic polyurethane layer, the stress value of the film in a state of 10% elongation under a temperature condition of 23°C ± 2°C is preferably 20 N/25 mm or less, and more preferably 15 N/25 mm or less. When this stress value is larger than 20 N/25 mm, the film may be hard, difficult to be stretched, and cause wrinkles, resulting in poor pasting workability.

In the thermoplastic polyurethane layer, the load (residual stress) 30 seconds after stopping at a state of 40% elongation under a temperature condition of 23°C ± 2°C is usually 25 N/25 mm or less, preferably 20 N/25 mm or less, and more preferably 16 N/25 mm or less. When fabricating a multilayer film and pasting it on a step or a three-dimensional curved surface, part of the film is pasted on the adherend, then while stretching the film with one hand, it is brought along the step or the three-dimensional curved surface, and the adherend and the film are closely adhered by a squeegee held in the opposite hand. In this respect, if its residual stress is larger than 25 N/25 mm, the force of pulling back of the film is large when pasting, making it difficult to fix the position of the film with one hand while it is stretched, or causing glue shift, which may make handling difficult.

These stresses can be measured by, for example, cutting the sample to an appropriate size and elongating it to a predetermined length in a commercially available tensile tester.

The thermoplastic polyurethane layer preferably contains an ultraviolet absorber. When the film contains an ultraviolet absorber, if it is used outdoors, deterioration of the polyurethane layer and deterioration of, in the case where an adhesive or the like is applied to the film for use, the adhesive can be reduced.

There is no particular restriction on the ultraviolet absorber as long as it is conventionally known, and for example, benzotriazole-based, triazine-based, and benzophenone-based ultraviolet absorbers are preferred.

Examples of the benzotriazole-based ultraviolet absorbers include 2-(2'-hydroxy-5'-methylphenyl)benzotriazole, 2-(2'-hydroxy-5'-methylphenyl)-5,6-dichlorobenzotriazole), 2-(2'-hydroxy-5'-t-butylphenyl) benzotriazole, 2-(2'-hydroxy-3'-methyl-5'-t-butylphenyl)benzotriazole, 2-(2'-hydroxy-3',5'-di-t-butylphenyl)-5-chloro-benzotriazole, 2-(2'-hydroxy-5'-phenylphenyl)-5-chlorobenzotriazole, 2-(2'-hydroxy-3',5'-di-t-butylphenyl)-5-chlorobenzotriazole, 2-(2'-hydroxy-3'-t-butyl-5'-methylphenyl)-5-chlorobenzotriazole, 2-(2'-hydroxy-3',5'-di-t-amylphenyl)benzotriazole, 2-(2'-hydroxy-3',5'-di-t-butylphenyl)benzotriazole, 2-(2'-hydroxy-5'-t-octylphenyl)benzotriazole, 2-{2'-hydroxy-3'-(3",4",5",6"-tetrahydrophthalimidomethyl)-5'-methylphenyl}benzotriazole, and 2-{2-hydroxy-3,5-bis(α,α'-dimethylbenzyl)phenyl}-2-hydroxybenzotriazole, as well as mixtures, modified products, polymerized products, and derivatives thereof.

Examples of the triazine-based ultraviolet absorbers include 2-(4,6-diphenyl-1,3,5-triazin-2-yl)-5-[(hexyl)oxy]-phenol, 2-[4-[(2-hydroxy-3-dodecyloxypropyl)oxy]-2-hydroxyphenyl]-4,6-bis(2,4 dimethylphenyl)-1,3,5-triazine, 2-[4-[(2-hydroxy-3-tridecyloxypropyl)oxy]-2-hydroxyphenyl]-4,6-bis(2,4dimethylphenyl)-1,3,5-triazine, and 2,4-bis(2,4-dimethylphenyl)-6-(2- hydroxy-4-iso-octyloxyphenyl)-s-triazine, as well as mixtures, modified products, polymerized products, and derivatives thereof.

Examples of the benzophenone-based ultraviolet absorbers include 2,3'-dihydroxy-4,4'-dimethoxybenzophenone, 2,2'-dihydroxy-4-methoxybenzophenone, and 2,2',4,4'-tetrahydroxybenzophenone.

In the thermoplastic polyurethane layer, it is also preferable to use these ultraviolet absorbers in combination with a light stabilizer or antioxidant.

Examples of the light stabilizer include hindered amine light stabilizers such as poly[{6-(1,1,3,3-tetramethylbutyl)amino-1,3,5-triazine-2,4-diyl}{ (2,2,6,6-tetramethyl-4-piperidyl)imino}hexamethylene {(2,2,6,6-tetramethyl-4-piperidyl)imino}], dimethyl succinate-1-(2-hydroxyethyl)-4-hydroxy-2,2,6,6-tetramethylpiperidine polycondensate, and bis(1-octyloxy-2,2,6,6-tetramethyl-4-piperidyl) sebacate.

As the antioxidant, phenolic antioxidants, phosphoric acid-based antioxidants, sulfur-based antioxidants, and others can be used, and examples thereof include hindered phenolic antioxidants such as the trade names Irganox 1010 and Irganox 1076 manufactured by BASF Japan, and phosphorus-based antioxidants such as the trade name Adekastab PEP8 manufactured by ADEKA Corporation.

In the thermoplastic polyurethane layer, the light transmittance, calculated in accordance with JIS S3107 from data measured with an automatic recording spectrophotometer in accordance with JIS R3106, is 25% or less for the transmittance at a wavelength of 300 to 380 nm, preferably 15% or less, and more preferably 10% or less. By suppressing the transmission of light in the ultraviolet region in this way, the film can be used as an agricultural film that is required to block ultraviolet rays and as a measure to prevent various damages caused by birds and beasts that can visually recognize ultraviolet rays.

### <Surface Coating Layer>

The surface coating layer in the present invention usually contains a urethane bond in the main chain. If the surface coating layer contains a urethane bond, it is easier for the surface coating layer to follow elongation of the thermoplastic polyurethane layer when pasted on a step or a three-dimensional curved surface, and cracks of the surface coating layer can also be prevented when the film is elongated.

The stretchability of the surface coating layer can be confirmed by elongating the multilayer film. Specifically, visible cracks in the surface coating layer are confirmed by cutting into the form of strips the multilayer film obtained by forming a surface coating layer on a thermoplastic polyurethane layer, fixing the strip to a tensile testing machine, and elongating it. The percentage of elongation at which cracks begin to occur in the surface coating layer is defined as crack elongation of the surface coating layer. The crack elongation of the surface coating layer is not particularly limited, but is usually 60% or more, preferably 80% or more, and more preferably 100% or more.

There is no particular restriction on the film-forming resin composition used for the surface coating layer as long as it contains a urethane bond, and a two-component curable type obtained by mixing a polyisocyanate compound and a polyol compound at the time of use is preferred, and a thermosetting type is more preferred.

Examples of the polyisocyanate compound include aliphatic diisocyanates, cyclic aliphatic diisocyanates, and tri- or higher-functional isocyanate compounds. Examples of the aliphatic diisocyanates include lysine diisocyanate, hexamethylene diisocyanate, and trimethylhexane diisocyanate. Examples of the cyclic aliphatic diisocyanates include hydrogenated xylylene diisocyanate, isophorone diisocyanate, methylcyclohexane-2,4-(or 2,6)-diisocyanate, 4,4'-methylenebis(cyclohexyl isocyanate), and 1,3-(isocyanatomethyl)cyclohexane. Examples of the tri- or higher-functional isocyanate compounds include lysine triisocyanate.

Examples of the polyisocyanate compound may also include isocyanate polymers, such as so-called isocyanurate products, biuret products, adduct products, and allophanate products, and isocyanate compounds added to polyhydric alcohols or low molecular weight polyester resins.

Note that the polyisocyanate compound may be in the form of a so-called block isocyanate as long as it reacts with the diol.

The polyol compound is preferably at least any one selected from the group consisting of polycaprolactone polyols, polycaprolactam polyols, polycarbonate polyols, polyester polyols, polyether polyols, acrylic polyols, and fluorinated polyols.

Examples of the film-forming resin composition also include block polymers in which a polyol compound is copolymerized with a fluorine component, a silicone component, and other components, graft polymers in which a fluorine component, a silicone component, and other components are bonded as side chains, and block-graft polymers that combine them.

To the film-forming resin composition used for the surface coating layer, the same ultraviolet absorber, light stabilizer, or antioxidant as that for the thermoplastic polyurethane layer can be added as appropriate.

Commercially available products of the coating film-forming resin composition used for the surface coating layer are commercially available from, for example, Dainichiseika Color & Chemicals Mfg. Co., Ltd., Tokushiki Co., Ltd., Arakawa Chemical Industries, Ltd., and others.

The surface coating layer can be formed by appropriately adjusting the viscosity of a film-forming resin composition by dilution with a solvent or water before application, applying it to the surface of the thermoplastic polyurethane layer, then drying the solvent and water, and curing it by known methods.

There is no particular restriction on this diluent solvent, and suitable examples thereof include methyl isobutyl ketone (MIBK), ethyl acetate, butyl acetate, methyl ethyl ketone (MEK), and toluene.

Examples of the method for curing include thermal curing, light curing, electron beam curing, moisture curing, and oxidative curing. Here, light curing can be performed by UV curing, where ultraviolet rays are used for curing, but when the multilayer film is used outdoors, it is necessary to use a weathering agent such as an ultraviolet absorber, which inhibits curing, and thus the use of the ultraviolet absorber which absorbs ultraviolet ray may be restricted. Therefore, among the above, thermal curing is particularly preferred, in which the resin composition is heated to form a crosslinked structure and cured.

There is no particular restriction on the method for application, and the application can be performed using known coating apparatuses such as bar coaters, spray coaters, air knife coaters, kiss roll coaters, metaling bar coaters, gravure roll coaters, reverse roll coaters, dip coaters, and die coaters, for example. There is no particular restriction on the method for drying, either, and known drying technologies for film coating can be used as appropriate, for example.

The temperature and time for thermal curing can be set as appropriate to the extent that the thermoplastic polyurethane layer is not deformed. The temperature is, for example, 40 to 120°C, and the time is, for example, 10 minutes to 1 week. Examples of the method for thermal curing may include methods using hot air, a drying furnace (dryer) in a known coating machine, and an aging room.

There is no particular limitation on the thickness of the surface coating layer, and it is preferably 3 to 50 µm, and more preferably 5 to 20 µm. When the thickness is less than 3 µm, the surface coating layer may not achieve the desired performance, and when the thickness is thicker than 50 µm, the surface coating layer may not follow elongation of the thermoplastic polyurethane layer when pasted on a step or a three-dimensional curved surface, causing the surface coating layer to be cracked.

For the purpose of protecting the surface coating layer and imparting smoothness to the surface of the surface coating layer, it is preferable that a separator in the form of a film (or in the form of a sheet) be pasted on the surface of the film-forming resin composition after application of the film-forming resin composition constituting the surface coating layer.

Examples of the material that forms the separator include polyester-based resins such as polyethylene terephthalate (PET), polyolefin-based resins such as polyethylene (PE) and polypropylene (PP), polyimide (PI), polyether ether ketone (PEEK), and paper.

It is preferable to use a separator whose surface of the film made of the material mentioned above has been further subjected to a release treatment. Examples of the method of release treatment include a method for coating the surface with a silicone-based, fluorine-based, acrylic, melamine-based, alkyd-based, or other release agent, and a method for laminating a polyolefin-based resin such as polyethylene or polypropylene thereon. In particular, a polyethylene terephthalate film surface-treated with a release agent is suitably used as the separator.

It is desirable that the surface of the separator be smooth. The surface roughness Ra (arithmetic mean roughness) of the surface of the separator that is adjacent to the surface coating layer is preferably 20 nm or less, and still more preferably 15 nm or less. When this surface roughness Ra is larger than 20 nm, the film may appear whitish when pasted on glossy painted surfaces such as automobiles. Whether or not the film appears whitish after pasting can be evaluated not only by visual observation but also by reflection haze. The reflection haze can be measured with a surface analyzer "Rhopoint IQ-S" manufactured by Konica Minolta Japan, Inc. or other devices. The reflection haze is preferably 2.0% or less, and more preferably 1.5% or less.

### <Adhesive Layer>

When an adhesive layer is provided for use, known adhesives can be used. As the adhesive, general adhesives such as acrylic adhesives, rubber-based adhesives, silicone-based adhesives, polyester-based adhesives, and urethane-based adhesives can be used. Among the above, acrylic adhesives that can demonstrate suitable adhesive force, durability, and other properties are preferred.

Also, in addition to the above-mentioned components, materials that can usually be added to the above-mentioned components, such as a flame retardant, a heat resistance improver, a plasticizer, a lubricant, an antistatic agent, an electroconductivity imparting agent, a colorant, inorganic and organic fillers, a fibrous reinforcing agent, and a reaction retarder, may be added to the thermoplastic polyurethane layer, the surface coating layer, and the adhesive layer to the extent that they do not affect the physical properties.

As for the optical characteristics of the obtained multilayer film, the total light transmittance is 90% or more, preferably 92% or more, and the haze value is 3.0% or less, preferably 2.0% or less, as in the thermoplastic polyurethane layer.

In the obtained multilayer film, the stress at the time of 10% elongation is preferably 20 N/25 mm or less and the load (residual stress) 30 seconds after stopping at a state of 40% elongation is preferably 25 N/25 mm or less. When the stress at the time of 10% elongation is 20 N/25 mm or less and the load (residual stress) 30 seconds after stopping at a state of 40% elongation is 25 N/25 mm or less, the thermoplastic polyurethane layer exhibits moderate stretchability while the surface coating layer has good followability to the thermoplastic polyurethane layer, allowing good pasting workability on the object to be protected.

By using HDI-TPU in the thermoplastic polyurethane layer, the multilayer film of the present invention is excellent in chemical resistance and can prevent change in appearance and reduction in adhesive strength. Furthermore, since the multilayer film of the present invention has the surface coating layer containing a urethane bond, moderate stretchability is obtained and good followability to the thermoplastic polyurethane layer is achieved, allowing smooth pasting on the object to be protected.

Therefore, the multilayer film of the present invention can be widely used to protect adherends having steps or three-dimensional curved surfaces, not only as painting protective sheets or surface protective sheets for preventing scratches caused by abrasions and flying stones on the exterior parts of vehicles such as automobiles and for preventing deterioration due to weather, but also as films that are pasted on curved surface parts of flexible liquid crystals and other devices to protect the screen.

### Examples

Hereinafter, Examples of the present invention will be described, but the present invention is not limited to the Examples described below.

### Examination 1. Physical Properties When Thermoplastic Polyurethane Layer Has Single Layer and One Polyisocyanate Component Is Used Alone

At first, the present inventors examined how the physical properties of a thermoplastic polyurethane layer were changed depending on a polyisocyanate component, as described below, when the thermoplastic polyurethane layer had a single layer (see Figure 1) and one polyisocyanate component was used alone.

### (Example 1)

A thermoplastic polyurethane resin produced by a copolymerization reaction of hexamethylene diisocyanate (hereinafter, referred to as "HDI") as the polyisocyanate component and polycarbonate polyol as the polyol component was fed to an extruder, melted and kneaded, and then extruded from a T-die attached to the tip of the extruder.

Both sides of the extrudate were nipped in a state sandwiched between polyethylene terephthalate (hereinafter, referred to as "PET") films as the separator to fabricate a thermoplastic polyurethane (hereinafter, also referred to as "TPU") film in the form of a layer (thermoplastic polyurethane layer) with a thickness of 150 µm.

The PET films on both sides of this fabricated thermoplastic polyurethane film were peeled off, and the hardness, stress relaxation property, tensile characteristics, and optical characteristics of the thermoplastic polyurethane film were measured as described below. The results are shown in Table 1. The thermoplastic polyurethane film in this state consists of 100% by mass of a thermoplastic polyurethane that is a reaction product obtained by using hexamethylene diisocyanate (hereinafter, referred to as "HDI-TPU").

Meanwhile, as a coating liquid for a film-forming resin composition of the surface coating layer, a coating liquid of a fluorine-modified acrylic urethane resin A was prepared by compounding a fluorine-modified acrylic polyol (solid content 35%) with an isocyanate-based curing agent (solid content 60%) and ethyl acetate as a diluent solvent in a mass ratio of 39:19:42.

The PET film on one side of the fabricated TPU layer was peeled off, and the coating liquid for the surface coating layer was applied thereto so that the thickness after drying would be 10 µm, thereby fabricating a multilayer film of Example 1. Its engine cleaner resistance was evaluated by using chemical resistance as an index as described below.

### [Measurement of Each Physical Property]

### <Hardness>

The hardness was measured using a durometer (spring-type rubber hardness tester) in accordance with JIS K7311.

### <Stress Relaxation Property>

The sample for measurement was cut into a width of 25 mm and a length of 150 mm, and fixed to a tensile tester (Autograph AG-X: manufactured by Shimadzu Corporation) so that the distance between the chucks was 100 mm. Subsequently, the sample was tensioned at a speed of 200 mm/min under a temperature condition of 23°C ± 2°C. The tensioning was stopped when the distance between the chucks reached 140 mm and the sample was in a state of 40% elongation (elongated state with 1.4 times the initial length), and the load (residual stress) was measured in N units 30 seconds after the stopping.

### <Tensile Characteristics>

The sample for measurement was cut into a width of 25 mm and a length of 100 mm, and fixed to a tensile tester (Autograph AG-X: manufactured by Shimadzu Corporation) so that the distance between the chucks was 50 mm. Subsequently, the sample was tensioned at a speed of 300 mm/min under a temperature condition of 23°C ± 2°C, and the stress in a state of 10% elongation was measured in N units.

### <Optical Characteristics>

While measuring the total light transmittance (%) in accordance with JIS K7361-1: 1997, the haze value (%) was also measured in accordance with JIS K7136: 2000, using a haze meter (NDH7000: manufactured by Nippon Denshoku Industries Co., Ltd).

### <Engine Cleaner Resistance>

The same volumes of dichloromethane and methanol were weighed into a measuring cylinder to prepare an engine cleaner, which was used as a mixed liquid for the chemical resistance test. One drop of this mixed liquid was added onto the surface coating layer of the sample for measurement, and the resultant was then left standing until 5 seconds and 60 seconds passed. Then, the drop-added surface was wiped with paper waste cloth, and the presence or absence of abnormality in appearance was visually confirmed. Evaluation criteria were as follows.

"Good" indicated by circle: The appearance was not changed after 60 seconds.

"Fair" indicated by triangle: The appearance was not changed after 5 seconds, whereas the appearance was changed to become whitish after 60 seconds.

"Poor" indicated by X-mark: The appearance was changed to become whitish after 5 seconds.

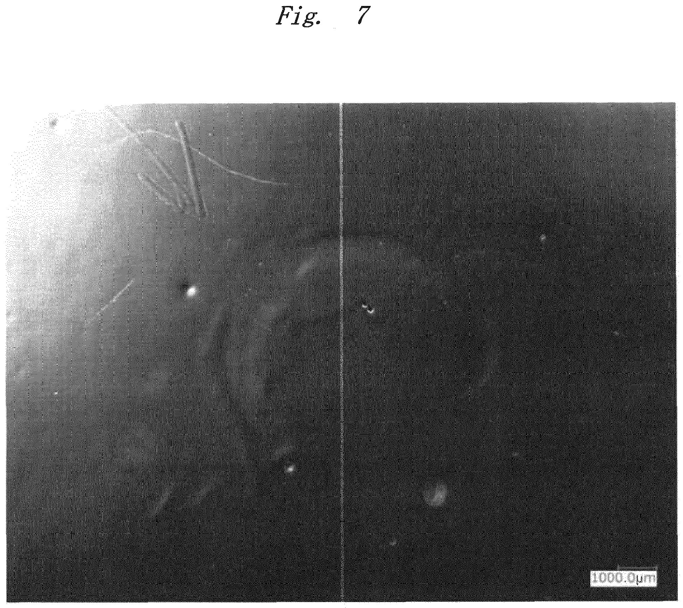

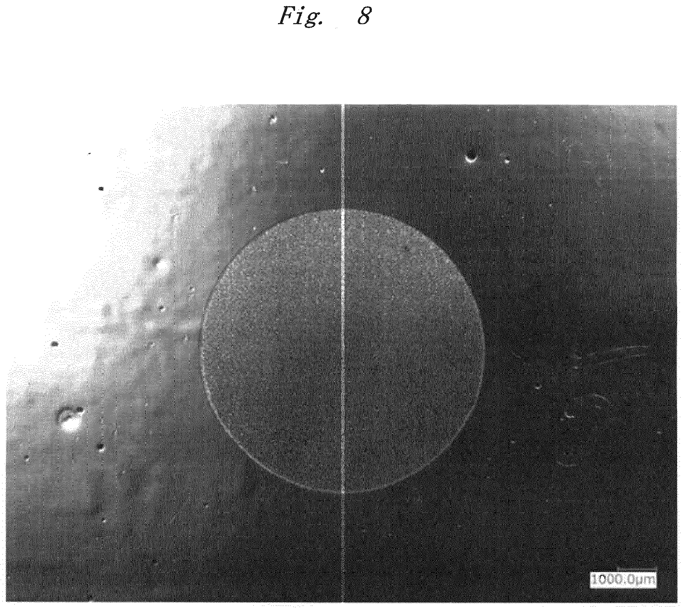

As examples, a photograph of the results of Example 1 is shown in Figure 7, and a photograph of the results of Comparative Example 2 is shown in Figure 8.

### (Examples 2 to 4)

Each thermoplastic polyurethane film (thermoplastic polyurethane layer) and each multilayer film were fabricated in the same manner as in Example 1 except that a thermoplastic polyurethane resin differing in hardness from Example 1 was used. The hardness, stress relaxation property, tensile characteristics, and optical characteristics of the thermoplastic polyurethane layer, and the engine cleaner resistance of the multilayer film were measured in the same manner as in Example 1. The results are shown in Table 1.

### (Example 5)

A thermoplastic polyurethane film (thermoplastic polyurethane layer) and a multilayer film of Example 5 were fabricated in the same manner as in Example 1 except that the polyol component of Example 1 was changed to polycaprolactone polyol. The hardness, stress relaxation property, tensile characteristics, and optical characteristics of the thermoplastic polyurethane layer, and the engine cleaner resistance of the multilayer film were measured in the same manner as in Example 1. The results are shown in Table 1.

### (Example 6)

A thermoplastic polyurethane film (thermoplastic polyurethane layer) and a multilayer film of Example 6 were fabricated in the same manner as in Example 1 except that the polyol component of Example 1 was changed to polyadipate polyol. The hardness, stress relaxation property, tensile characteristics, and optical characteristics of the thermoplastic polyurethane layer, and the engine cleaner resistance of the multilayer film were measured in the same manner as in Example 1. The results are shown in Table 1.

### (Example 7)

A thermoplastic polyurethane film (thermoplastic polyurethane layer) and a multilayer film of Example 7 were fabricated in the same manner as in Example 1 except that the polyol component of Example 1 was changed to polyether polyol. The hardness, stress relaxation property, tensile characteristics, and optical characteristics of the thermoplastic polyurethane layer, and the engine cleaner resistance of the multilayer film were measured in the same manner as in Example 1. The results are shown in Table 1.

### (Reference Example 1)

A thermoplastic polyurethane film (thermoplastic polyurethane layer) and a multilayer film of Reference Example 1 were fabricated in the same manner as in Example 1 except that the polyisocyanate component of Example 1 was changed to diphenylmethane diisocyanate (MDI) as aromatic isocyanate and the polyol component of Example 1 was changed to polyether polyol. The hardness, stress relaxation property, tensile characteristics, and optical characteristics of the thermoplastic polyurethane layer, and the engine cleaner resistance of the multilayer film were measured in the same manner as in Example 1. The results are shown in Table 1.

### (Comparative Example 1)

A thermoplastic polyurethane film (thermoplastic polyurethane layer) and a multilayer film of Comparative Example 1 were fabricated in the same manner as in Example 1 except that the polyisocyanate component of Example 1 was changed to dicyclohexylmethane diisocyanate (hereinafter, referred to as "I₁₂MDI"). The hardness, stress relaxation property, tensile characteristics, and optical characteristics of the thermoplastic polyurethane layer, and the engine cleaner resistance of the multilayer film were measured in the same manner as in Example 1. The results are shown in Table 2.

### (Comparative Example 2)

A thermoplastic polyurethane film (thermoplastic polyurethane layer) and a multilayer film of Comparative Example 2 were fabricated in the same manner as in Example 5 except that the polyisocyanate component of Example 5 was changed to H₁₂MDI. The hardness, stress relaxation property, tensile characteristics, and optical characteristics of the thermoplastic polyurethane layer, and the engine cleaner resistance of the multilayer film were measured in the same manner as in Example 1. The results are shown in Table 2.

### (Comparative Examples 3 and 4)

Each thermoplastic polyurethane film (thermoplastic polyurethane layer) and each multilayer film were fabricated in the same manner as in Comparative Example 2 except that a thermoplastic polyurethane resin differing in hardness from Comparative Example 2 was used. The hardness, stress relaxation property, tensile characteristics, and optical characteristics of the thermoplastic polyurethane layer, and the engine cleaner resistance of the multilayer film were measured in the same manner as in Example 1. The results are shown in Table 2.

### (Comparative Example 5)

A thermoplastic polyurethane film (thermoplastic polyurethane layer) and a multilayer film of Comparative Example 5 were fabricated in the same manner as in Example 6 except that the polyisocyanate component of Example 6 was changed to H₁₂MDI. The hardness, stress relaxation property, tensile characteristics, and optical characteristics of the thermoplastic polyurethane layer, and the engine cleaner resistance of the multilayer film were measured in the same manner as in Example 1. The results are shown in Table 2.

### (Comparative Example 6)

A thermoplastic polyurethane film (thermoplastic polyurethane layer) and a multilayer film of Comparative Example 6 were fabricated in the same manner as in Example 7 except that the polyisocyanate component of Example 7 was changed to H₁₂MDI. The hardness, stress relaxation property, tensile characteristics, and optical characteristics of the thermoplastic polyurethane layer, and the engine cleaner resistance of the multilayer film were measured in the same manner as in Example 1. The results are shown in Table 2. Examples 1-7 are not within the scope of claim 1.

**[Table 1]**

| | | | | | Example 1 | Example 2 | Example 3 | Example 4 | Example 5 | Example 6 | Example 7 | Reference Example 1 |
|---|---|---|---|---|---|---|---|---|---|---|---|---|
| Confi-gura-tion | TPU layer | Isocyanate | | | HDI | HDI | HDI | HDI | HDI | HDI | HDI | MDI |
| | | Polyol | | | Polycarbonate | Polycarbonate | Polycarbonate | Polycarbonate | Caprolactone | Adipate | Ether | Ether |
| | | Hardness | | Shore A | 97 | 95 | 90 | 85 | 90 | 95 | 90 | 90 |
| | | Thickness | | µm | 150 | 150 | 150 | 150 | 150 | 150 | 150 | 150 |
| TPU film | | Stress relaxation property | 40% · 30sec | N/25mm | 27.4 | 30.1 | 18.5 | 12.0 | 27.0 | 20.1 | 21.9 | 14.1 |
| Physical properties | | Tensile characteristics | 10%Mo | N/25mm | 16.2 | 20.1 | 10.2 | 7.9 | 24.1 | 15.7 | 16.9 | 8.8 |
| | | Optical characteristics | Total light transmittance | % | 92.06 | 92.16 | 92.57 | 92.62 | 91.85 | 92.06 | 92.13 | 91.42 |
| | | | Haze value | % | 1.38 | 1.18 | 1.44 | 1.39 | 1.74 | 1.45 | 1.49 | 1.65 |
| Evaluation | | Engine cleaner resistance | | | ○ | ○ | ○ | ○ | ○ | ○ | ○ | ○ |

**[Table 2]**

| | | | | | Comparative Example 1 | Comparative Example 2 | Comparative Example 3 | Comparative Example 4 | Comparative Example 5 | Comparative Example 6 |
|---|---|---|---|---|---|---|---|---|---|---|
| Configuration | TPU layer | Isocyanate | | | H₁₂MDI | H₁₂MDI | H₁₂MDI | H₁₂MDI | H₁₂MDI | H₁₂MDI |
| | | Polyol | | | Polycarbonate | Caprolactone | Caprolactone | Caprolactone | Adipate | Ether |
| | | Hardness | | Shore A | 90 | 95 | 91 | 90 | 90 | 88 |
| | | Thickness | | µm | 150 | 150 | 150 | 150 | 150 | 150 |
| TPU film | | Stress relaxation property | 40% · 30sec | N/25mm | 10.2 | 14.5 | 11.4 | 17.4 | 7.4 | 9.4 |
| Physical properties | | Tensile characteristics | 10%Mo | N/25mm | 11.5 | 14.9 | 10.1 | 12.8 | 7.9 | 7.9 |
| | | Optical characteristics | Total light transmittance | % | 92.05 | 92.30 | 92.03 | 92.10 | 91.96 | 92.36 |
| | | | Haze value | % | 1.70 | 1.37 | 1.04 | 1.60 | 1.35 | 1.54 |
| Evaluation | | Engine cleaner resistance | | | × | × | × | × | × | × |

As is evident from the results of Tables 1 and 2, the multilayer films having the thermoplastic polyurethane layer that was a reaction product obtained by using HDI in Examples 1 to 7 were excellent in chemical resistance without change in appearance because an engine cleaner added dropwise to the surface coating layer did not swell the thermoplastic polyurethane layer (see Figure 7). By contrast, the multilayer films of Comparative Examples having the thermoplastic polyurethane layer obtained without the use of HDI were inferior in chemical resistance because the engine cleaner swelled the thermoplastic polyurethane layer and the appearance was changed to became whitish (see Figure 8).

It was thus found that the multilayer film provided with a coating layer on the surface of the thermoplastic polyurethane layer can have good chemical resistance without the swelling of the thermoplastic polyurethane layer in a chemical such as an engine cleaner, by constituting the thermoplastic polyurethane layer by a reaction product obtained by using HDI.

Here, the multilayer film of Reference Example 1 is also excellent in chemical resistance, but is not suitable for the purpose of the present invention as a surface protective sheet or the like because the aromatic isocyanate MDI is used in the thermoplastic polyurethane layer in this multilayer film and thus turns yellow when exposed to light.

The hardness was in a suitable range for all examples, and the optical characteristics were also good in all examples, with a total light transmittance of 90% or more and a haze value of 2.0% or less.

On the other hand, the thermoplastic polyurethane layers of some examples had 25 N/25 mm or more as a value indicating the stress relaxation property and 20 N/25 mm or more as a value indicating the tensile characteristics. Therefore, further studies were desired in consideration of the pasting workability of the multilayer film.

### Examination 2. Physical Properties When Thermoplastic Polyurethane Layer Has Plurality of Layers

Next, the present inventors examined how the physical properties of a thermoplastic polyurethane layer were changed when the thermoplastic polyurethane layer had a plurality of layers, a layer comprising HDI-TPU and a layer comprising H₁₂MDI-TPU which is a thermoplastic polyurethane excellent in pasting workability (see Figure 4), and had varying thicknesses, in order to obtain good results about pasting workability while obtaining good results about chemical resistance.

### (Example 8)

A thermoplastic polyurethane produced by a copolymerization reaction of HDI as the polyisocyanate component and polycarbonate polyol as the polyol component was fed to an extruder, melted and kneaded, and then extruded from a T-die attached to the tip of the extruder. Both sides of the extrudate were nipped in a state sandwiched between a PET film on one side and a matte biaxially oriented polypropylene (hereinafter, referred to as "OPP") film on the other side to fabricate a thermoplastic polyurethane film in the form of a layer (first thermoplastic polyurethane layer) with a thickness of 25 µm. The obtained thermoplastic polyurethane film was cured for about 1 day, and only the OPP film was peeled off.

A thermoplastic polyurethane produced by a copolymerization reaction of H₁₂MDI as the polyisocyanate component and polycaprolactone polyol as the polyol component was fed to an extruder, melted and kneaded, and then extruded from a T-die attached to the tip of the extruder so that the thickness would be 125 µm (second thermoplastic polyurethane layer). Both sides of the extrudate were nipped in a state sandwiched between a PET film on one side and the thermoplastic polyurethane film corresponding to the first thermoplastic polyurethane layer mentioned above on the other side to fabricate a thermoplastic polyurethane film (thermoplastic polyurethane layer) with a total thickness of 150 µm. This fabricated thermoplastic polyurethane film was constituted by PET/HDI-TPU 25 µm/H₁₂MDI-TPU 125 µm/PET (the symbol "/" represents between the layers, and PET and TPU can be manually peeled off). The first thermoplastic polyurethane layer in this state consists of 100% by mass of HDI-TPU.

As for the thicknesses of the HDI-TPU layer before lamination and the thermoplastic polyurethane film (HDI-TPU 25 µm/H₁₂MDI-TPU 125 µm) after the lamination, thicknesses at 10 locations in the width direction in the obtained film having a width of 300 mm were measured in accordance with JIS K7130 using a constant-pressure thickness gauge "FFA-1 1.25N" manufactured by Ozaki MFG. Co., Ltd., and an average value thereof was adopted.

The PET films were peeled off from this fabricated thermoplastic polyurethane film, and the stress relaxation property, tensile characteristics, and optical characteristics of the thermoplastic polyurethane layer were measured in the same manner as in Example 1. The results are shown in Table 3. The hardness of the first thermoplastic polyurethane layer in the table was described as the value measured in Examination 1 (the same holds true for subsequent Examples and Comparative Examples).

The PET film on the HDI-TPU side of the fabricated thermoplastic polyurethane layer was peeled off, and the coating liquid of the fluorine-modified acrylic urethane resin A of Example 1 was applied to the HDI-TPU surface so that the thickness after drying would be 10 µm, thereby fabricating a multilayer film of Example 8. The cross section of this multilayer film was observed under a microscope (digital microscope VHX-6000: manufactured by Keyence Corp.) to confirm that the HDI-TPU layer was 25 µm. The engine cleaner resistance was evaluated in the same manner as in Example 1 near the location at which the cross section was cut off. The results are shown in Table 3.

### (Example 9)

A thermoplastic polyurethane film (thermoplastic polyurethane layer) and a multilayer film were fabricated in the same manner as in Example 8 except that the thickness of the HDI-TPU layer of the first thermoplastic polyurethane layer of Example 8 was changed to 20 µm while the thickness of the H₁₂MDI-TPU layer of the second thermoplastic polyurethane layer of Example 8 was changed to 130 µm. The stress relaxation property, tensile characteristics, and optical characteristics of the thermoplastic polyurethane layer, and the engine cleaner resistance of the multilayer film were measured in the same manner as in Example 8. The results are shown in Table 3.

### (Example 10)

A thermoplastic polyurethane film (thermoplastic polyurethane layer) and a multilayer film were fabricated in the same manner as in Example 8 except that the thickness of the HDI-TPU layer of the first thermoplastic polyurethane layer of Example 8 was changed to 15 µm while the thickness of the H₁₂MDI-TPU layer of the second thermoplastic polyurethane layer of Example 8 was changed to 135 µm. The stress relaxation property, tensile characteristics, and optical characteristics of the thermoplastic polyurethane layer, and the engine cleaner resistance of the multilayer film were measured in the same manner as in Example 8. The results are shown in Table 3.

### (Example 11)

A thermoplastic polyurethane film (thermoplastic polyurethane layer) and a multilayer film were fabricated in the same manner as in Example 8 except that the thickness of the HDI-TPU layer of the first thermoplastic polyurethane layer of Example 8 was changed to 10 µm while the thickness of the H₁₂MDI-TPU layer of the second thermoplastic polyurethane layer of Example 8 was changed to 140 µm. The stress relaxation property, tensile characteristics, and optical characteristics of the thermoplastic polyurethane layer, and the engine cleaner resistance of the multilayer film were measured in the same manner as in Example 8. The results are shown in Table 3.

### (Example 12)

A thermoplastic polyurethane film (thermoplastic polyurethane layer) and a multilayer film were fabricated in the same manner as in Example 8 except that the thickness of the HDI-TPU layer of the first thermoplastic polyurethane layer of Example 8 was changed to 5 µm while the thickness of the H₁₂MDI-TPU layer of the second thermoplastic polyurethane layer of Example 8 was changed to 145 µm. The stress relaxation property, tensile characteristics, and optical characteristics of the thermoplastic polyurethane layer, and the engine cleaner resistance of the multilayer film were measured in the same manner as in Example 8. The results are shown in Table 3.

### (Example 13)

A thermoplastic polyurethane film (thermoplastic polyurethane layer) and a multilayer film of Example 13 were fabricated in the same manner as in Example 8 except that the polyol component of Example 8 was changed to polycaprolactone polyol. The stress relaxation property, tensile characteristics, and optical characteristics of the thermoplastic polyurethane layer, and the engine cleaner resistance of the multilayer film were measured in the same manner as in Example 8. The results are shown in Table 3.

### (Example 14)

A thermoplastic polyurethane film (thermoplastic polyurethane layer) and a multilayer film were fabricated in the same manner as in Example 13 except that the thickness of the HDI-TPU layer of the first thermoplastic polyurethane layer of Example 13 was changed to 20 µm while the thickness of the H₁₂MDI-TPU layer of the second thermoplastic polyurethane layer of Example 13 was changed to 130 µm. The stress relaxation property, tensile characteristics, and optical characteristics of the thermoplastic polyurethane layer, and the engine cleaner resistance of the multilayer film were measured in the same manner as in Example 8. The results are shown in Table 3.

### (Example 15)

A thermoplastic polyurethane film (thermoplastic polyurethane layer) and a multilayer film were fabricated in the same manner as in Example 13 except that the thickness of the HDI-TPU layer of the first thermoplastic polyurethane layer of Example 13 was changed to 15 µm while the thickness of the H₁₂MDI-TPU layer of the second thermoplastic polyurethane layer of Example 13 was changed to 135 µm. The stress relaxation property, tensile characteristics, and optical characteristics of the thermoplastic polyurethane layer, and the engine cleaner resistance of the multilayer film were measured in the same manner as in Example 8. The results are shown in Table 3.

### (Example 16)

A thermoplastic polyurethane film (thermoplastic polyurethane layer) and a multilayer film were fabricated in the same manner as in Example 13 except that the thickness of the HDI-TPU layer of the first thermoplastic polyurethane layer of Example 13 was changed to 10 µm while the thickness of the H₁₂MDI-TPU layer of the second thermoplastic polyurethane layer of Example 13 was changed to 140 µm. The stress relaxation property, tensile characteristics, and optical characteristics of the thermoplastic polyurethane layer, and the engine cleaner resistance of the multilayer film were measured in the same manner as in Example 8. The results are shown in Table 3.

### (Comparative Example 7)

A thermoplastic polyurethane film (thermoplastic polyurethane layer) and a multilayer film were fabricated in the same manner as in Example 8 except that the thickness of the HDI-TPU layer of the first thermoplastic polyurethane layer of Example 8 was changed to 4 µm while the thickness of the H₁₂MDI-TPU layer of the second thermoplastic polyurethane layer of Example 8 was changed to 146 µm. The stress relaxation property, tensile characteristics, and optical characteristics of the thermoplastic polyurethane layer, and the engine cleaner resistance of the multilayer film were measured in the same manner as in Example 8. The results are shown in Table 4.

### (Comparative Example 8)

A thermoplastic polyurethane film (thermoplastic polyurethane layer) and a multilayer film were fabricated in the same manner as in Example 8 except that the thickness of the HDI-TPU layer of the first thermoplastic polyurethane layer of Example 8 was changed to 2 µm while the thickness of the H₁₂MDI-TPU layer of the second thermoplastic polyurethane layer of Example 8 was changed to 148 µm. The stress relaxation property, tensile characteristics, and optical characteristics of the thermoplastic polyurethane layer, and the engine cleaner resistance of the multilayer film were measured in the same manner as in Example 8. The results are shown in Table 4.

**[Table 3]**

| | | | | | Example 8 | Example 9 | Example 10 | Example 11 | Example 12 | Example 13 | Example 14 | Example 15 | Example 16 |
|---|---|---|---|---|---|---|---|---|---|---|---|---|---|
| Config uration | TPU layer | HDI-TPU layer | Isocyanate | | HDI | | | | | HDI | | | |
| | | | Polyol | | Polycarbonate | | | | | Caprolactone | | | |
| | | | Hardness | Shore A | 97 | | | | | 90 | | | |
| | | | Thickness | µm | 25 | 20 | 15 | 10 | 5 | 25 | 20 | 15 | 10 |
| | | H₁₂MDI-TPU layer | Thickness | µm | 125 | 130 | 135 | 140 | 145 | 125 | 130 | 135 | 140 |
| TPU film | | Stress relaxation property | 40% ▪ 30sec | N/25m m | 19.6 | 20.0 | 19.8 | 19.7 | 19.5 | 13.7 | 12.6 | 12.9 | 12.4 |
| Physical properties | | Tensile characteristics | 10%Mo | N/25m m | 15.1 | 15.6 | 14.7 | 14.1 | 16.8 | 13.7 | 12.6 | 12.4 | 12.6 |
| | | Optical characteristics | Total light transmittance | % | 92.38 | 92.24 | 92.37 | 92.29 | 92.36 | 92.27 | 92.33 | 92.39 | 92.32 |
| | | | Haze value | % | 1.10 | 1.13 | 0.85 | 0.95 | 1.81 | 0.97 | 1.36 | 1.03 | 0.92 |
| Evaluation | | Engine cleaner resistance | | | ○ | ○ | ○ | ○ | ○ | ○ | ○ | ○ | ○ |

**[Table 4]**

| | | | | | Comparative Example 7 | Comparative Example 8 |
|---|---|---|---|---|---|---|
| Configuration | TPU layer | HDI-TPU layer | Isocyanate | | HDI | |
| | | | Polyol | | Polycarbonate | |
| | | | Hardness | Shore A | 97 | |
| | | | Thickness | µm | 4 | 2 |
| | | H₁₂MDI-TPU layer | Thickness | µm | 146 | 148 |
| TPU film | | Stress relaxation property | 40% ▪ 30sec | N/25mm | 18.9 | 16.6 |
| Physical properties | | Tensile characteristics | 10%Mo | N/25mm | 16.4 | 17.2 |
| | | Optical characteristics | Total light transmittance | % | 92.34 | 92.33 |
| | | | Haze value | % | 1.57 | 1.71 |
| Evaluation | | Engine cleaner resistance | | | Δ | × |

As is evident from the results of Tables 3 and 4, the multilayer films having a HDI-TPU layer thickness of 5 µm or larger in Examples 8 to 16 according to the present invention were excellent in chemical resistance without change in appearance because an engine cleaner added dropwise to the surface coating layer did not swell HDI-TPU. By contrast, the multilayer films of Comparative Examples having a HDI-TPU layer thickness of smaller than 5 µm were inferior in chemical resistance because the appearance was changed to become whitish in a short time. A HDI-TPU layer thickness of 5 µm or smaller makes it difficult to stably form a film having a width exceeding 1 m and is thus problematic for production.

It was thus found that the multilayer film having a thermoplastic polyurethane layer comprising a plurality of layers, a HDI-TPU layer and a H₁₂MDI-TPU layer, needs to have a HDI-TPU layer thickness of 5 µm or larger and can thereby have good chemical resistance without the swelling of the thermoplastic polyurethane layer in a chemical such as an engine cleaner.

In the multilayer films of Examples 8 to 16 having a thermoplastic polyurethane layer comprising a plurality of layers, a HDI-TPU layer and a H₁₂MDI-TPU layer, the thermoplastic polyurethane layer had a relatively lower value indicating the stress relaxation property than that of Examples 1 to 7 having a thermoplastic polyurethane layer comprising a single layer. For example, from the comparison of Example 1 with Examples 8 to 12 or Example 5 with Examples 13 to 16 in which HDI-TPU was formed by using the same combination of HDI and the polyol component, the stress relaxation property in Examples 8 to 12 was on the order of 50 to 71% with respect to Example 1, and the stress relaxation value in Examples 13 to 16 was on the order of 46 to 51% with respect to Example 5.

Likewise, in the multilayer films of Examples 8 to 16, the thermoplastic polyurethane layer had a relatively lower value indicating the tensile characteristics than that of Examples 1 to 7. For example, from the comparison of Example 5 with Examples 13 to 16 in which HDI-TPU was formed by using the same combination of HDI and the polyol component, the tensile characteristics in Examples 13 to 16 was on the order of 51 to 57% with respect to Example 5.

It is thus presumed that the multilayer films of Examples 8 to 16 were improved in stress relaxation property and were excellent in pasting workability on an object to be protected with the multilayer film, by having a multilayer configuration having a HDI-TPU layer and a H₁₂MDI-TPU layer in combination.

The optical characteristics were good in all examples, with a total light transmittance of 92% or more and a haze value of 2.0% or less.

### Examination 3. Physical Properties When Thermoplastic Polyurethane Layer Has Single Layer and Has Combination of HDI-TPU as Polyisocyanate Component and H₁₂MDI-TPU as Thermoplastic Polyurethane Excellent in Pasting Workability

Subsequently, the present inventors examined how the physical properties of a thermoplastic polyurethane layer were changed depending on the contents of HDI-TPU and H₁₂MDI-TPU when the thermoplastic polyurethane layer had a single layer (see Figure 1) and HDI-TPU was used in combination with H₁₂MDI-TPU as a thermoplastic polyurethane excellent in pasting workability, in order to obtain good results about pasting workability while obtaining good results about chemical resistance.

### (Example 17)

50 parts by mass of HDI-TPU produced by a copolymerization reaction of HDI as the polyisocyanate component and polycarbonate polyol as the polyol component, and 50 parts by mass of H₁₂MDI-TPU produced by a copolymerization reaction of H₁₂MDI as the polyisocyanate component and polycaprolactone polyol as the polyol component were fed to an extruder, melted and kneaded, and then extruded from a T-die attached to the tip of the extruder. Both sides of the extrudate were nipped in a state sandwiched between PET films as the separator to fabricate a thermoplastic polyurethane film in the form of a layer (thermoplastic polyurethane layer) with a thickness of 150 µm.

The PET films were peeled off from this fabricated thermoplastic polyurethane film, and the stress relaxation property, tensile characteristics, and optical characteristics of the thermoplastic polyurethane film were measured in the same manner as in Example 1. The results are shown in Table 5. The thermoplastic polyurethane film in this state contains 50% by mass of HDI-TPU.

The PET film on one side of the fabricated thermoplastic polyurethane layer was peeled off, and the coating liquid of the fluorine-modified acrylic urethane resin A of Example 1 was applied thereto so that the thickness after drying would be 10 µm, thereby fabricating a multilayer film of Example 17. The stress relaxation property, tensile characteristics, and optical characteristics of the thermoplastic polyurethane layer, and the engine cleaner resistance of the multilayer film were measured in the same manner as in Example 1. The results are shown in Table 5.

### (Example 18)

A thermoplastic polyurethane film (thermoplastic polyurethane layer) and a multilayer film of Example 18 were fabricated in the same manner as in Example 17 except that the amounts of HDI-TPU and H₁₂MDI-TPU compounded in Example 17 were changed to 40 parts by mass and 60 parts by mass, respectively. The stress relaxation property, tensile characteristics, and optical characteristics of the thermoplastic polyurethane layer, and the engine cleaner resistance of the multilayer film were measured in the same manner as in Example 17. The results are shown in Table 5. In this example, the thermoplastic polyurethane film contains 40% by mass of HDI-TPU.

### (Comparative Example 9)

A thermoplastic polyurethane film (thermoplastic polyurethane layer) and a multilayer film of Comparative Example 9 were fabricated in the same manner as in Example 17 except that the amounts of HDI-TPU and H₁₂MDI-TPU compounded in Example 17 were changed to 30 parts by mass and 70 parts by mass, respectively. The stress relaxation property, tensile characteristics, and optical characteristics of the thermoplastic polyurethane layer, and the engine cleaner resistance of the multilayer film were measured in the same manner as in Example 17. The results are shown in Table 5. In this example, the thermoplastic polyurethane film contains 30% by mass of HDI-TPU.

### (Comparative Example 10)

A thermoplastic polyurethane film (thermoplastic polyurethane layer) and a multilayer film of Comparative Example 10 were fabricated in the same manner as in Example 17 except that the amounts of HDI-TPU and H₁₂MDI-TPU compounded in Example 17 were changed to 20 parts by mass and 80 parts by mass, respectively. The stress relaxation property, tensile characteristics, and optical characteristics of the thermoplastic polyurethane layer, and the engine cleaner resistance of the multilayer film were measured in the same manner as in Example 17. The results are shown in Table 5. In this example, the thermoplastic polyurethane film contains 20% by mass of HDI-TPU.

**[Table 5]**

| | | | | | Example 17 | Example 18 | Comparative Example 9 | Comparative Example 10 |
|---|---|---|---|---|---|---|---|---|
| Configuration | TPU layer | HDI-TPU layer | Isocyanate | | HDI | | | |
| | | | Polyol | | Polycarbonate | | | |
| | | | Hardness | Shore A | 97 | | | |
| | | | Proportion | parts by mass | 50 | 40 | 30 | 20 |
| | | H₁₂MDI-TPU layer | Proportion | parts by mass | 50 | 60 | 70 | 80 |
| | | Thickness | | µm | 150 | 150 | 150 | 150 |
| TPU film | | Stress relaxation property | 40% ▪ 30sec | N/25mm | 14.8 | 13.9 | 12.8 | 11.3 |
| Physical properties | | Tensile characteristics | 10%Mo | N/25mm | 12.5 | 12.3 | 11.0 | 10.7 |
| | | Optical characteristics | Total light transmittance | % | 91.67 | 91.06 | 91.60 | 92.18 |
| | | | Haze value | % | 2.20 | 2.93 | 4.21 | 5.03 |
| Evaluation | | Engine cleaner resistance | | | ○ | Δ | Δ | × |

As is evident from the results of Table 5, all the multilayer films having the combination of HDI-TPU and H₁₂MDI-TPU in Examples 17 and 18 and Comparative Example 9 had chemical resistance with change in appearance to an extent that did not matter even when an engine cleaner was added dropwise to the surface coating layer. However, it was found that for obtaining excellent chemical resistance without change in appearance against exposure to an engine cleaner for a long time, it is desired to compound the HDI-TPU resin in a ratio of 5:5 or more, i.e., 50% by mass or more, as in Example 17.

In the multilayer films having the combination of HDI-TPU and H₁₂MDI-TPU in Examples 17 and 18, the thermoplastic polyurethane layer had a relatively lower value indicating the stress relaxation property than that of Examples 1 to 7 having a thermoplastic polyurethane layer comprising only HDI-TPU. For example, from the comparison of Example 1 with Examples 17 and 18 in which HDI-TPU was formed by using the same combination of HDI and the polyol component, the stress relaxation property in Examples 17 and 18 was on the order of 51 to 54% with respect to Example 1.

Likewise, in the multilayer films of Examples 17 and 18, the thermoplastic polyurethane layer had a relatively lower value indicating the tensile characteristics than that of Examples 1 to 7. For example, from the comparison of Example 1 with Examples 17 and 18 in which HDI-TPU was formed by using the same combination of HDI and the polyol component, the tensile characteristics in Examples 17 and 18 was on the order of 76 to 77% with respect to Example 1.

It is thus presumed that the multilayer films of Examples 17 and 18 were improved in stress relaxation property and were excellent in pasting workability on an object to be protected with the multilayer film, by combining a HDI-TPU resin with a H₁₂MDI-TPU resin.

The optical characteristics were good in all examples with a total light transmittance of 90% or more, though the haze value was as good as 3.0% or less in Examples 17 and 18, but largely exceeded 3.0% in Comparative Examples 9 and 10. Hence, it was found that for good optical characteristics, it is desired to compound HDI-TPU in a ratio of more than 3:7 to H₁₂MDI-TPU, i.e., more than 30% by mass of HDI-TPU, more preferably to compound HDI-TPU in a ratio of 5:5 or more, i.e., 50% by mass or more.

### Examination 4. Adhesive Strength

The surface, opposite to the surface coating layer, of the thermoplastic polyurethane layer might be degraded due to a diluent that penetrates the thermoplastic polyurethane layer upon application of a film-forming resin composition of the surface coating layer. Therefore, the influence of good or poor chemical resistance on adhesive strength was examined as described below.

### (Example 19)

As a coating liquid for forming a coating film of the surface coating layer, a coating liquid of a modified acrylic urethane resin was prepared by compounding a modified acrylic polyol (solid content 50%) with an isocyanate-based curing agent (solid content 45%) and butyl acetate as a diluent solvent in a mass ratio of 32:20:48.

Subsequently, the PET film on the HDI-TPU side of the thermoplastic polyurethane layer fabricated in Example 16 was peeled off, and the coating liquid of the modified acrylic urethane resin of Example 1 was applied to the HDI-TPU surface so that the thickness after drying would be 10 µm, thereby fabricating a multilayer film of Example 19. This multilayer film was evaluated for a tape adhesive force as an index for adhesive strength as described below. The results are shown in Table 6.

### <Tape Adhesive Force>

The sample for measurement of the fabricated multilayer film was cut into a width of 30 mm and a length of 100 mm. The PET film, on the side opposite to the surface coating layer, of the thermoplastic polyurethane layer was peeled off, and a tape with a width of 25 mm and a length of 120 mm having a 20 µm acrylic adhesive layer and a 150 µm thermoplastic polyurethane layer was pressure-bonded to the thermoplastic polyurethane surface on the peeled side using a rubber roller. Immediately after the pressure bonding, the tape was fixed to the upper chuck of a tensile tester (Autograph AG-X: manufactured by Shimadzu Corporation) while the sample was fixed to the lower chuck thereof. Subsequently, the pressure-bonded portion was peeled off at a speed of 300 mm/min and a chuck traveling distance of 160 mm, the pealing load was measured in N units, and an average of the measurement values was regarded as the tape adhesive force. However, this average of the measurement values excluded a measurement value obtained in a portion corresponding to the chuck traveling distance of the first 25 mm.

### (Example 20)

A multilayer film of Example 20 was fabricated in the same manner as in Example 19 except that the thermoplastic polyurethane layer of Example 19 was changed to the film fabricated in Example 11. The tape adhesive force of this multilayer film was measured in the same manner as in Example 19. The results are shown in Table 6.

### (Example 21)

A multilayer film of Example 21 was fabricated in the same manner as in Example 19 except that the thermoplastic polyurethane layer of Example 19 was changed to the film fabricated in Example 12. The tape adhesive force of this multilayer film was measured in the same manner as in Example 19. The results are shown in Table 6.

### (Comparative Example 11)

A multilayer film of Comparative Example 11 was fabricated in the same manner as in Example 19 except that the thermoplastic polyurethane layer of Example 19 was changed to the film fabricated in Comparative Example 2. The tape adhesive force of this multilayer film was measured in the same manner as in Example 19. The results are shown in Table 6.

**[Table 6]**

| | | | | | Example 19 | Example 20 | Example 21 | Comparative Example 11 |
|---|---|---|---|---|---|---|---|---|
| Configuration | Surface coating layer | | | | Modified acrylic urethane resin | | | |
| | TPU layer | HDI-TPU layer | Isocyanate | | HDI | HDI | | H₁₂MDI |
| | | | Polyol | | Caprolactone | Polycarbonate | | Caprolactone |
| | | | Hardness | Shore A | 90 | 97 | | 95 |
| | | | Thickness | µm | 10 | 10 | 5 | 150 |
| | | H₁₂MDI-TPU layer | Thickness | µm | 140 | 140 | 145 | - |
| Evaluation | | Tape adhesive force | | N/25 mm | 12.4 | 11.9 | 11.0 | 8.5 |

As is evident from the results of Table 6, the multilayer films of Examples 19 to 21 according to the present invention had high adhesive strength with a tape adhesive force of 10 N/25 mm or more, which was relatively 1.29 to 1.46 times higher than that of the multilayer film of Comparative Example 11. This is presumably because the diluent solvent contained upon surface coating layer formation did not penetrate the thermoplastic polyurethane layer and the resulting multilayer films of Examples 19 to 21 were excellent in chemical resistance and were free from reduction in adhesive strength caused by a chemical.

For comparison, the tape adhesive force of 150 µm H₁₂MDI-TPU with no surface coating layer formed thereon was confirmed in the same manner as above and was consequently 12.2 N/25 mm. The multilayer films of Examples 19 to 21 exhibited a value equivalent even thereto. It is thus evident that the diluent solvent contained upon surface coating layer formation did not penetrate the thermoplastic polyurethane layer.

### Examination 5. Pasting Workability

Further, pasting workability was confirmed and examined as described below when the thermoplastic polyurethane layer had a single layer (HDI-TPU layer) or a plurality of layers (HDI-TPU layer and H₁₂MDI-TPU layer).

### (Example 22)

As a coating liquid for forming a coating film of the surface coating layer, a coating liquid of a fluorine-modified acrylic urethane resin B was prepared by compound a fluorine-modified acrylic polyol (solid content 30%) with an isocyanate-based curing agent (solid content 60%) and methyl isobutyl ketone (MIBK) as a diluent solvent in a mass ratio of 38:23:39.

Subsequently, the PET film on the first thermoplastic polyurethane layer HDI-TPU side of the thermoplastic polyurethane layer fabricated in Example 13 was peeled off, and the coating liquid of the fluorine-modified acrylic urethane resin B was applied to the HDI-TPU surface so that the thickness after drying would be 10 µm, thereby fabricating a multilayer film of Example 22.

The PET film on the H₁₂MDI-TPU side of the fabricated multilayer film was peeled off, and the stress relaxation property, tensile characteristics, and optical characteristics of the multilayer film were measured in the same manner as in Example 1. Its engine cleaner resistance was also evaluated in the same manner as in Example 1, while the pasting workability was evaluated as described below. The results are shown in Table 7.

### <Pasting Workability>

The sample of the fabricated multilayer film was cut into A4 size. The PET on the thermoplastic polyurethane layer side was peeled off and an acrylic adhesive was applied, and monitors were then asked to paste it on each of the curved surface of a door mirror of an automobile and an uneven painted steel sheet as objects to be protected. Since the door mirror having a three-dimensional curved surface had a higher level of difficulty in pasting than that of the uneven painted steel sheet, evaluation criteria were as follows.
"Good" indicated by circle: The sample was able to be pasted on the door mirror of an automobile without generating wrinkles in the multilayer film.
"Fair" indicated by triangle: Although wrinkles were generated upon pasting on the door mirror of an automobile, the sample was able to be pasted on the uneven painted steel sheet without generating wrinkles.
"Poor" indicated by X-mark: Wrinkles were also generated upon pasting on the uneven painted steel sheet.

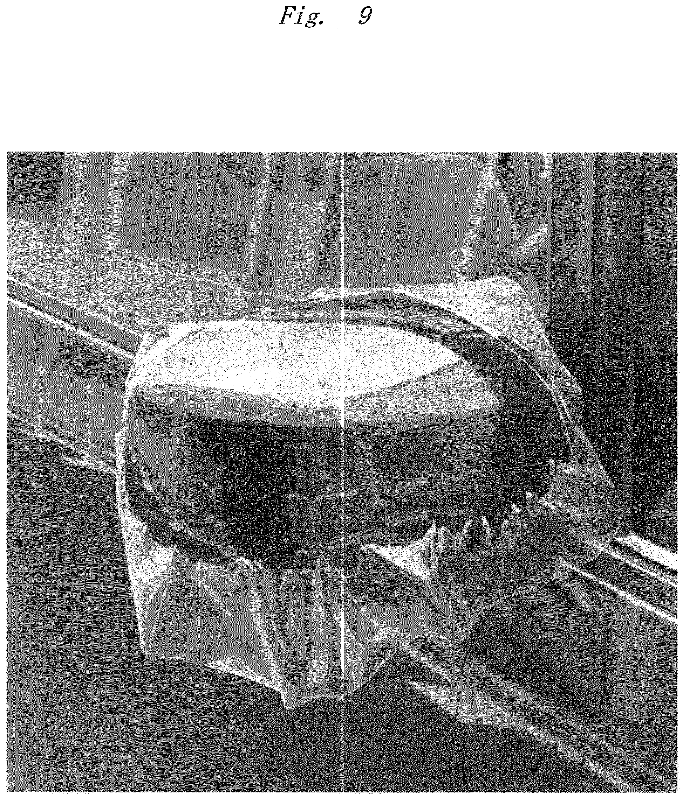

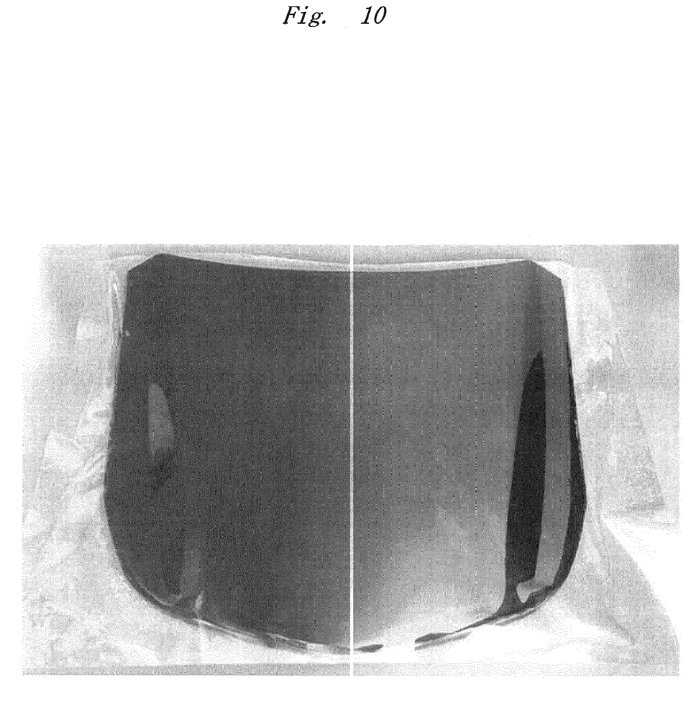

As examples, a photograph of the results about the pasting workability on the automobile door mirror in Example 22 is shown in Figure 9, and a photograph of the results about the pasting workability on the uneven painted steel sheet in Example 24 is shown in Figure 10.

### (Example 23)

A multilayer film of Example 23 was fabricated in the same manner as in Example 22 except that the thermoplastic polyurethane layer of Example 22 was changed to the film fabricated in Example 16. The stress relaxation property, tensile characteristics, and optical characteristics of this multilayer film were measured in the same manner as in Example 22 while the engine cleaner resistance and pasting workability of the multilayer film were evaluated. The results are shown in Table 7.

### (Example 24)

A multilayer film of Example 24 was fabricated in the same manner as in Example 22 except that the thermoplastic polyurethane layer of Example 22 was changed to the film fabricated in Example 5. The stress relaxation property, tensile characteristics, and optical characteristics of this multilayer film were measured in the same manner as in Example 22 while the engine cleaner resistance and pasting workability of the multilayer film were evaluated. The results are shown in Table 7.

### (Example 25)

A multilayer film of Example 25 was fabricated in the same manner as in Example 22 except that the thermoplastic polyurethane layer of Example 22 was changed to the film fabricated in Example 7. The stress relaxation property, tensile characteristics, and optical characteristics of this multilayer film were measured in the same manner as in Example 22 while the engine cleaner resistance and pasting workability of the multilayer film were evaluated. The results are shown in Table 7.

### (Comparative Example 12)

A multilayer film of Comparative Example 12 was fabricated in the same manner as in Example 22 except that the thermoplastic polyurethane layer of Example 22 was changed to the film fabricated in Comparative Example 6. The stress relaxation property, tensile characteristics, and optical characteristics of this multilayer film were measured in the same manner as in Example 22 while the engine cleaner resistance and pasting workability of the multilayer film were evaluated. The results are shown in Table 7.

### (Comparative Example 13)

A multilayer film of Comparative Example 13 was fabricated in the same manner as in Example 22 except that the thermoplastic polyurethane layer of Example 22 was changed to the film fabricated in Comparative Example 5. The stress relaxation property, tensile characteristics, and optical characteristics of this multilayer film were measured in the same manner as in Example 22 while the engine cleaner resistance and pasting workability of the multilayer film were evaluated. The results are shown in Table 7.

### (Comparative Example 14)

A multilayer film of Comparative Example 14 was fabricated in the same manner as in Example 22 except that the thermoplastic polyurethane layer of Example 22 was changed to the film fabricated in Comparative Example 2. The stress relaxation property, tensile characteristics, and optical characteristics of this multilayer film were measured in the same manner as in Example 22 while the engine cleaner resistance and pasting workability of the multilayer film were evaluated. The results are shown in Table 7.

**[Table 7]**

| | | | | | Example 22 | Example 23 | Example 24 | Example 25 | Comparative Example 12 | Comparative Example 13 | Comparative Example 14 |
|---|---|---|---|---|---|---|---|---|---|---|---|
| Configuration | Surface coating layer | | | | Fluorine-modified acrylic urethane resin B | | | | | | |
| | TPU layer | HDI-TPU layer | Isocyanate | | HDI | | | HDI | H₁₂MDI | H₁₂MDI | H₁₂MDI |
| | | | Polyol | | Caprolactone | | | Ether | Ether | Adipate | Caprolactone |
| | | | Hardness | Shore A | 90 | | | 90 | 88 | 90 | 95 |
| | | | Thickness | µm | 25 | 10 | 150 | 150 | 150 | 150 | 150 |
| | | H₁₂MDI-TPU layer | Thickness | µm | 125 | 140 | - | - | - | - | - |
| Multilayer film (surface coating layer/TPU layer) | | Stress relaxation property | 40% ▪ 30sec | N/25m m | 20.9 | 19.3 | 35.6 | 30.0 | 15.4 | 13.1 | 16.5 |
| | | Tensile characteristics | 10%Mo | N/25m m | 18.0 | 16.7 | 26.5 | 21.8 | 12.5 | 8.6 | 14.0 |
| Physical properties | | Optical characteristics | Total light transmittance | % | 92.08 | 92.24 | 91.68 | 92.00 | 92.32 | 92.11 | 92.29 |
| | | | Haze value | % | 1.07 | 1.31 | 1.46 | 1.57 | 2.09 | 1.19 | 1.00 |
| Evaluation | | Pasting workability | | | ○ | ○ | Δ | Δ | ○ | ○ | ○ |
| | | Engine cleaner resistance | | | ○ | ○ | ○ | ○ | × | × | × |

As is evident from the results of Table 7, all the multilayer films of Examples 22 to 25 of the present invention were excellent in chemical resistance.

However, in Examples 22 and 23, no wrinkle was generated in the multilayer film pasted on any of the automobile door mirror and the uneven painted steel sheet (see Figure 9). By contrast, in Examples 24 and 25, wrinkles were generated upon pasting on the automobile door mirror, though no wrinkle was generated upon pasting on the uneven painted steel sheet (see Figure 10).

Hence, for obtaining chemical resistance as well as excellent pasting workability, it was desired to combine HDI-TPU with H₁₂MDI-TPU, as in Examples 22 and 23.

On the other hand, the multilayer films of Comparative Examples 12 to 14 having a thermoplastic polyurethane comprising only H₁₂MDI-TPU were excellent in pasting workability, but were inferior in chemical resistance. It was thus found that although H₁₂MDI is capable of contributing to improvement in pasting workability, HDI is necessary for excellent chemical resistance.

The multilayer films of Examples 22 and 23 had a value indicating the stress relaxation property as good as 25 N/25 mm or less and a value indicating the tensile characteristics as good as 20 N/25 mm or less, whereas the multilayer films of Examples 24 and 25 had 30 N/25 mm or more as a value indicating the stress relaxation property and more than 20 N/25 mm as a value indicating the tensile characteristics. Hence, it was found that these stress values within the desired ranges and moderate stretchability of the multilayer film are necessary for excellent pasting workability and it is desired to combine HDI-TPU with H₁₂MDI-TPU, as in Examples 22 and 23.

The optical characteristics were good in all examples, with a total light transmittance of 92% or more and a haze value of 3.0% or less.

### Industrial Applicability

The present invention can be used to protect adherends having steps or three-dimensional curved surfaces, not only as painting protective sheets or surface protective sheets for preventing scratches caused by abrasions and flying stones on the exterior parts of vehicles such as automobiles and for preventing deterioration due to weather, but also as films that are pasted on curved surface parts of flexible liquid crystals and other devices to protect the screen.

### Reference Signs List

10,20 Multilayer film
11,21 Thermoplastic polyurethane layer
12 Surface coating layer
13 Adhesive layer
22 First thermoplastic polyurethane layer
23 Second thermoplastic polyurethane layer
a Adherend

## Claims

1. A multilayer film having a thermoplastic polyurethane layer and a surface coating layer, wherein
the thermoplastic polyurethane layer comprises a single layer or a plurality of layers, and
a layer adjacent to the surface coating layer comprises more than 30% by mass of a thermoplastic polyurethane that is a reaction product obtained by using hexamethylene diisocyanate (hereinafter, referred to as "HDI-TPU"),
wherein among the plurality of layers the layer adjacent to the surface coating layer has a thickness of 5 µm or larger, and
wherein when the thermoplastic polyurethane layer comprises a single layer, the single layer further comprises a thermoplastic polyurethane that is a reaction product obtained by using dicyclohexylmethane diisocyanate (hereinafter, referred to as "H₁₂MDI-TPU").

2. The multilayer film according to claim 1, wherein when the thermoplastic polyurethane layer comprises a plurality of layers, a layer other than the layer adjacent to the surface coating layer comprises H₁₂MDI-TPU.

3. The multilayer film according to claim 1 or 2, wherein when the thermoplastic polyurethane layer comprises a plurality of layers, the layer adjacent to the surface coating layer comprises 100% by mass of HDI-TPU.

4. The multilayer film according to any of claims 1 to 3, wherein the surface coating layer has a urethane bond.

5. The multilayer film according to any of claims 1 to 4, wherein a haze value according to JIS K7136 is 3.0% or less.

6. Use of the multilayer film according to any one of claims 1 to 5 in protecting an adherend having a curved surface by pasting the multilayer film on the adherend having a curved surface.

## Patentansprüche

1. Mehrschichtige Folie mit einer Schicht aus einem thermoplastischen Polyurethan und einer Oberflächenbeschichtungsschicht, wobei
die Schicht aus dem thermoplastischen Polyurethan eine einzelne Schicht oder eine Vielzahl von Schichten umfasst, und
eine Schicht, die an die Oberflächenbeschichtungsschicht angrenzt, mehr als 30 Masse-% eines thermoplastischen Polyurethans umfasst, das ein Reaktionsprodukt ist, das unter Verwendung von Hexamethylendiisocyanat (im Folgenden als "HDI-TPU" bezeichnet) erhalten wird,
wobei aus der Vielzahl von Schichten die an die Oberflächenbeschichtungsschicht angrenzende Schicht eine Dicke von 5 µm oder mehr aufweist, und
wobei, wenn die Schicht aus dem thermoplastischen Polyurethan eine einzelne Schicht umfasst, die einzelne Schicht ferner ein thermoplastisches Polyurethan umfasst, das ein Reaktionsprodukt ist, das unter Verwendung von Dicyclohexylmethandiisocyanat (im Folgenden als "H₁₂MDI-TPU" bezeichnet) erhalten wird.

2. Mehrschichtige Folie nach Anspruch 1, wobei, wenn die Schicht aus dem thermoplastischen Polyurethan eine Vielzahl von Schichten umfasst, eine andere Schicht als die an die Oberflächenbeschichtungsschicht angrenzende Schicht H₁₂MDI-TPU umfasst.

3. Mehrschichtige Folie nach Anspruch 1 oder 2, wobei, wenn die Schicht aus dem thermoplastischen Polyurethan eine Vielzahl von Schichten umfasst, die an die Oberflächenbeschichtungsschicht angrenzende Schicht 100 Massen-% HDI-TPU umfasst.

4. Mehrschichtige Folie nach einem der Ansprüche 1 bis 3, wobei die Oberflächenbeschichtungsschicht eine Urethanbindung aufweist.

5. Mehrschichtige Folie nach einem der Ansprüche 1 bis 4, wobei ein Trübungswert gemäß JIS K7136 3,0 % oder weniger beträgt.

6. Verwendung der mehrschichtigen Folie nach einem der Ansprüche 1 bis 5 zum Schützen eines Fügeteils mit einer gekrümmten Oberfläche durch Aufbringen der mehrschichtigen Folie auf das Fügeteil mit einer gekrümmten Oberfläche.

## Revendications

1. Film multicouche comportant une couche de polyuréthane thermoplastique et une couche de revêtement de surface,
dans lequel
la couche de polyuréthane thermoplastique comprend une seule couche ou une pluralité de couches, et
une couche adjacente à la couche de revêtement de surface comprend plus de 30 % en masse d'un polyuréthane thermoplastique qui est un produit de réaction obtenu en utilisant du diisocyanate d'hexaméthylène (ci-après dénommé « HDI-TPU »),
dans lequel, parmi la pluralité de couches, la couche adjacente à la couche de revêtement de surface a une épaisseur de 5 µm ou plus, et
dans lequel, lorsque la couche de polyuréthane thermoplastique comprend une seule couche, la seule couche comprend en outre un polyuréthane thermoplastique qui est un produit de réaction obtenu en utilisant du diisocyanate de dicyclohexylméthane (ci-après dénommé « H₁₂MDI-TPU »).

2. Film multicouche selon la revendication 1, dans lequel lorsque la couche de polyuréthane thermoplastique comprend une pluralité de couches, une couche autre que la couche adjacente à la couche de revêtement de surface comprend du H₁₂MDI-TPU.

3. Film multicouche selon la revendication 1 ou 2, dans lequel lorsque la couche de polyuréthane thermoplastique comprend une pluralité de couches, la couche adjacente à la couche de revêtement de surface comprend 100 % en masse de HDI-TPU.

4. Film multicouche selon l'une quelconque des revendications 1 à 3, dans lequel la couche de revêtement de surface présente une liaison uréthane.

5. Film multicouche selon l'une quelconque des revendications 1 à 4, dans lequel une valeur de trouble selon la norme JIS K7136 est inférieure ou égale à 3,0 %.

6. Utilisation du film multicouche selon l'une quelconque des revendications 1 à 5 pour protéger un adhérent ayant une surface courbe en collant le film multicouche sur l'adhérent ayant une surface courbe.
